# EUROPEAN PATENT APPLICATION

(11) **EP 3 088 774 A1**
(43) Date of publication of application: **02.11.2016**
(21) Application number: 16166570.8
(22) Date of filing: 22.04.2016
(51) Int. Cl.: F16J 10/04, F02F 5/00, F16J 9/00, F02F 1/00, F02F 1/16

(54) **INTERNAL COMBUSTION ENGINE**

(30) Priority: 30.04.2015 JP 2015093506
(71) Applicant: Toyota Jidosha Kabushiki Kaisha, Toyota-shi, Aichi-ken, 471-8571 (JP)
(72) Inventor: SUZUKI, Takashi, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

An internal combustion engine includes a cylinder block (2), a cylinder liner (5), a piston (6), and a piston ring (18). The cylinder liner (5) has a cylindrical shape, and is provided inside the cylinder block (2). The piston (6) is positioned inside the cylinder liner (5). The piston (6) includes a ring groove (14) and a top land (15). The ring groove (14) is positioned on an outer periphery of the piston (6) in the vicinity of the top land (15). The piston ring (18) is arranged inside the ring groove (14). The cylinder liner (5) includes a first portion (30) and a second portion. The first portion (30) is positioned at least in a part of an inner periphery (5a) of the cylinder liner (5), which faces the top land (15) of the piston (6) when the piston (6) is at a top dead center. The first portion (30) includes a first inner periphery (30a). The first inner periphery (30a) has a first radius. The second portion includes a second inner periphery (5a). The second inner periphery (5a) has a second radius. The first radius is larger than the second radius by 100 µm to 1000 µm.

## Description

### BACKGROUND

### 1. Technical Field

The present invention relates to an internal combustion engine.

### 2. Description of Related Art

In a piston of an internal combustion engine, piston rings are arranged inside ring grooves formed in an outer periphery of the piston. An oil ring is the piston ring arranged at the lowest position among the piston rings. The oil ring is used to scrape off excessive oil adhered to a cylinder liner wall surface when the piston descends.

### SUMMARY

However, it is known that, in many internal combustion engines, oil in a crankcase flows into a combustion chamber even though the oil ring is used. Oil flows into the combustion chamber through an outer periphery of a piston, especially inside of the ring grooves, along with reciprocating motions of the piston. When oil in the crankcase flows into the combustion chamber, oil is burnt along with combustion inside the combustion chamber, thereby increasing oil consumption.

Thus, in Japanese Patent Application Publication JP 2012-241861 A, a recessed portion is formed in a lower surface of a piston ring across the whole circumference. According to JP 2012-241861 A, when a movement direction of the piston is reversed at a top dead center, the piston ring moves towards an upper surface of a ring groove without being adhered to a lower surface of the ring groove. Therefore, it is possible to prevent oil inside the ring groove from flowing into the combustion chamber.

It is considered that oil consumption happens in the following mechanism. First of all, an outer periphery of a top land of a piston and an inner periphery of a cylinder liner are arranged so as to face each other. The outer periphery of the top land of the piston and the inner periphery of the cylinder liner are positioned in a region where a flame does not propagate easily when air-fuel mixture is combusted inside a combustion chamber. Therefore, as the internal combustion engine is operated, deposits are formed on the outer periphery of the top land and the inner periphery of the cylinder liner, respectively. As the amounts of deposits grow, the deposit formed on the outer periphery of the top land, and the deposit formed on the inner periphery of the cylinder liner, which faces the outer periphery of the top land, come into contact with each other when the piston is at the top dead center.

Meanwhile, as stated above, in an internal combustion engine, oil inside a crankcase moves towards a combustion chamber side along the outer periphery of the piston along with reciprocating motions of the piston. The oil that has moved to the combustion chamber side is adhered to the deposit formed on the outer periphery of the top land of the piston. Thereafter, when the deposits are in contact with each other, the oil moves from the deposit formed on the outer periphery of the top land of the piston to the deposit formed on the inner periphery of the cylinder liner, which faces the top land. The oil adhered to the deposit formed on the inner periphery of the cylinder liner, which faces the top land, is exposed to high temperature caused by combustion of air-fuel mixture inside the combustion chamber when the piston descends, and is evaporated. Thus, the oil is consumed.

Therefore, an object of the present invention is to provide an internal combustion engine that restrains oil consumption.

According to one embodiment of the present invention, an internal combustion engine includes a cylinder block, a cylinder liner, a piston, and a piston ring. The cylinder liner has a cylindrical shape, and is provided inside the cylinder block. The piston is positioned inside the cylinder liner. The piston includes a ring groove and a top land. The ring groove is positioned on an outer periphery of the piston in the vicinity of the top land. The piston ring is arranged inside the ring groove. The cylinder liner includes a first portion and a second portion. The first portion is positioned at least in a part of an inner periphery of the cylinder liner, which faces the top land of the piston when the piston is at a top dead center (or at a predetermined top end center in case where a variable compression ratio mechanism is used). The first portion includes a first inner periphery. The first inner periphery has a first radius. The second portion includes a second inner periphery. The second inner periphery has a second radius. The first radius is larger than the second radius by 100 µm to 1000 µm.

According to an embodiment of the present invention, a minimum difference between the first radius and the second radius may be 200 µm or more, more preferably 250 µm or more, and most preferably 300 µm or more. In addition, a maximum difference between the first radius and the second radius may be 800 µm or less, more preferably 600 µm or less, and most preferably 500 µm or less.

According to an aspect of the present invention, the first portion may include a bottom surface extending from a lower end of the first inner periphery to a radially inner side of the cylinder liner, and the first portion may be defined by the bottom surface and the first inner periphery. The bottom surface may be at a position equal to or above an upper surface of the piston ring in an axial direction of the cylinder liner when the piston is at the top dead center.

According to an aspect of the present invention, the bottom surface may be at a position equal to an upper surface of the ring groove in the axial direction of the cylinder liner when the piston is at the top dead center.

According to an aspect of the present invention, the bottom surface of the first portion may be positioned above an upper surface of the ring groove in the axial direction of the cylinder liner by a predetermined margin when the piston is at the predetermined top dead center.

According to an aspect of the present invention, the predetermined margin may be less than 1000 µm, preferably less than 500 µm.

According to an aspect of the present invention, a position of the bottom surface may be lower than a position that is above an upper surface of the ring groove by 500 µm in the axial direction of the cylinder liner when the piston is at the top dead center.

According to an aspect of the present invention, the internal combustion engine may further comprise a variable compression ratio mechanism. The variable compression ratio mechanism is configured to change a mechanical compression ratio by changing relative positions of the piston and the cylinder block in the axial direction of the cylinder liner when the piston is at a top dead center. The piston may be at the predetermined top dead center in a state where the mechanical compression ratio set by the variable compression ratio mechanism is the largest.

According to an aspect of the present invention, the cylinder liner may include an upper marginal portion, a first connecting portion, and a second connecting portion. The upper marginal portion is located on the first inner periphery, and is an upper end part of the first inner periphery. The first inner periphery and the bottom surface is connected at the first connecting portion. The bottom surface and the second inner periphery is connected at the second connecting portion. At least one of the upper marginal portion, the first connecting portion, and the second connecting portion may be rounded or have a round shape.

According to an aspect of the present invention, the first portion may extend to an upper surface of the cylinder liner. The upper surface and the first inner periphery may be connected at a first connecting portion, the first inner periphery and the bottom surface may be connected at a second connecting portion, and the bottom surface and the second inner periphery may be connected at a third connecting portion. At least one of the first connecting portion, the second connecting portion, and the third connecting portion may be rounded or have a round shape.

Another aspect of the present invention relates to a manufacturing method of an internal combustion engine that includes a cylinder block, a cylinder liner, a piston, and a piston ring. The cylinder liner has a cylindrical shape, and is provided inside the cylinder block. The piston is positioned inside the cylinder liner. The piston includes a ring groove and a top land. The ring groove is positioned on an outer periphery of the piston in the vicinity of the top land. The piston ring is arranged inside the ring groove. The cylinder liner includes a first portion and a second portion. The first portion is positioned at least in a part of an inner periphery of the cylinder liner, which faces the top land of the piston when the piston is at a top dead center. The first portion includes a first inner periphery. The first inner periphery has a first radius. The second portion includes a second inner periphery. The second inner periphery has a second radius. According to the manufacturing method of the present invention, a distance between the first inner periphery and the second inner periphery in a radial direction of the cylinder liner (a difference of the first radius and the second radius) is set to be larger than a maximum accumulated height of a deposit that is expected to be accumulated on the first inner periphery during operation of the internal combustion engine, preferably during an operation time of at least 100 hours.

It is possible to provide an internal combustion engine that is able to restrain oil consumption in consideration of the mechanism of oil consumption.

### BRIEF DESCRIPTION OF THE DRAWINGS

Features, advantages, and technical and industrial significance of exemplary embodiments will be described below with reference to the accompanying drawings, in which like numerals denote like elements, and wherein:
FIG. 1 is a partial sectional view of an internal combustion engine;
FIG. 2A is a sectional view of upper parts of a piston and a cylinder liner when the piston is at a top dead center in an internal combustion engine according to a related art, and FIG. 2B is a sectional view of upper parts of the piston and the cylinder liner when the piston is located lower than the top dead center in the internal combustion engine shown in FIG. 2A;
FIG. 3 is a view of a change of height of a deposit formed on an inner periphery of a cylinder liner in each type of internal combustion engine with elapse of operation time;
FIG. 4 is a sectional view of upper parts of a piston and a cylinder liner when the piston is at a top dead center in an internal combustion engine according to a first embodiment of the present invention;
FIG. 5A is a sectional view of the upper parts of the piston and the cylinder liner when the piston is at the top dead center in a state where deposits are formed on the piston and the cylinder liner, and FIG. 5B is a sectional view when the piston shown in FIG. 5A is located lower than the top dead center;
FIG. 6 is a sectional view of upper parts of a piston and a cylinder liner when the piston is at a top dead center in an internal combustion engine according to first modified example of the first embodiment of the present invention;
FIG. 7 is a sectional view similar to FIG. 4, showing upper parts of a piston and a cylinder liner when the piston is at a top dead center in an internal combustion engine according to a second modified example of the first embodiment of the present invention;
FIG. 8 is a partial sectional view similar to FIG. 1, showing an internal combustion engine according to the second embodiment of the present invention, which has a variable compression ratio mechanism;
FIG. 9 is an exploded perspective view of the variable compression ratio mechanism shown in FIG. 8;
FIG. 10A to FIG. 10C are side sectional views illustrating movements of the internal combustion engine shown in FIG. 8;
FIG. 11A is a sectional view similar to FIG. 4, when a piston is at the top dead center in a state where a mechanical compression ratio is maximized, and FIG. 11B is a sectional view of a state where deposits are formed on the piston and the cylinder liner of the internal combustion engine shown in FIG. 11A;
FIG. 12 is a sectional view when the piston is at the top dead center in a state shown in FIG. 10A, namely, in a state where a compression ratio by the variable compression ratio mechanism is minimized;
FIG. 13A and FIG. 13B are schematic sectional side views of a variable length connecting rod; and
FIG. 14 is a sectional view similar to FIG. 4, showing an internal combustion engine according to a third embodiment of the present invention.

### DETAILED DESCRIPTION OF EMBODIMENTS

Embodiments are explained below in detail with reference to the drawings. Components corresponding to each other are denoted by common reference numerals throughout the drawings.

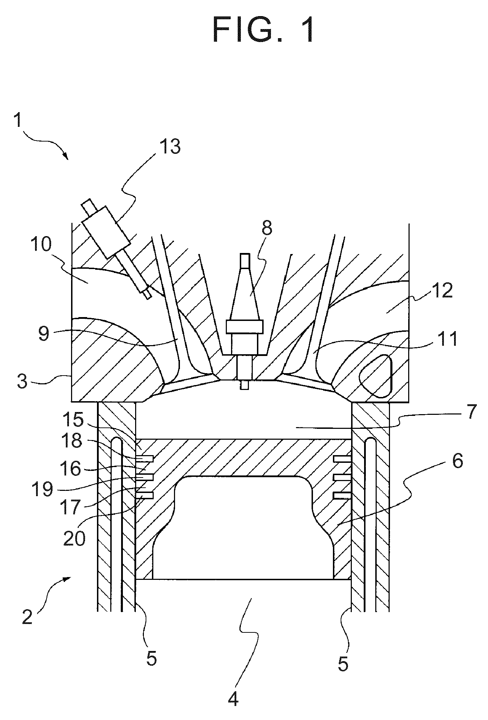

FIG. 1 shows a partial sectional view of an internal combustion engine 1 to which this embodiment is applicable. The internal combustion engine 1 has a cylinder block 2 and a cylinder head 3. The cylinder head 3 is fixed to the cylinder block 2 through a gasket (not shown). The cylinder block 2 has a cylinder liner 5 having a cylindrical shape inside the cylinder block 2, and an inner periphery of the cylinder liner 5 defines a cylinder 4. A piston 6 is arranged inside the cylinder 4 such that the piston 6 is able to slide. The piston 6, the cylinder liner 5, and the cylinder head 3 form a combustion chamber 7, and an ignition plug 8 is arranged in a center part of a top face of the combustion chamber 7. An intake port 10 communicates with the combustion chamber 7, and an intake valve 9 is provided between the combustion chamber 7 and the intake port 10. Similarly, an exhaust port 12 communicates with the combustion chamber 7, and an exhaust valve 11 is provided between the combustion chamber 7 and the exhaust port 12. A fuel injection valve 13 for injecting fuel is arranged inside the intake port 10.

In an outer periphery of the piston 6, a plurality of ring grooves are provided, extending in the circumferential direction of the piston 6, and a piston ring is arranged in each of the ring grooves. In this embodiment, in the outer periphery of the piston 6, three ring grooves are provided, which are separated from each other in an axial direction of the piston 6. Then, three piston rings are arranged around the piston 6. The piston rings are generally referred to as a top ring 18, a second ring 19, and an oil ring 20 from the top. In the piston 6, a part above the ring groove in which the top ring 18 is arranged, is referred to as a top land 15. Also, in the piston 6, a part between the ring groove in which the top ring 18 is arranged, and the ring groove in which the second ring 19 is arranged, is referred to as a second land 16. In addition, in the piston 6, a part between the ring groove in which the second ring 19 is arranged, and the ring groove in which the oil ring 20 is arranged, is referred to as a third land 17. In the explanation, a direction towards the combustion chamber 7 is regarded as an upper direction, and a direction opposite to the combustion chamber 7 side is regarded as a lower direction along the axis of the cylinder 4. However, it is not always necessary that the internal combustion engine is arranged so that the axis of the cylinder 4 extends vertically.

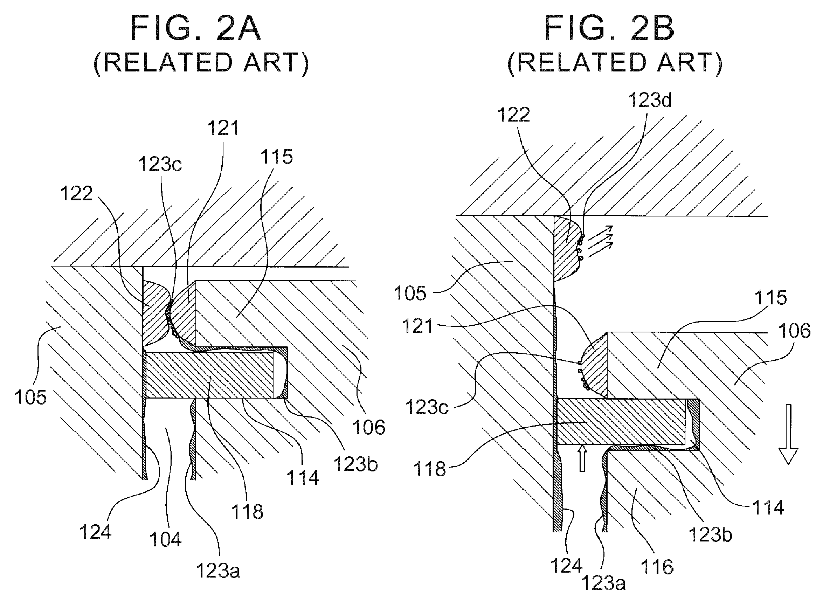

An internal combustion engine having the above-mentioned structure has a problem that oil used for lubrication and so on is consumed by combustion. However, a mechanism causing this problem had not been clearly elucidated. The inventors have conducted intensive researches on this, and elucidated a part of the mechanism of the oil consumption. The mechanism of oil consumption is explained below with reference to FIG. 2.

FIG. 2A is a sectional view of upper parts of a piston 106 and a cylinder liner 105 when the piston 106 is at a top dead center in an internal combustion engine according to a related art. FIG. 2B is a sectional view of the upper parts of the piston 106 and the cylinder liner 105 when the piston 106 is located lower than the top dead center in the internal combustion engine shown in FIG. 2A.

In the internal combustion engine according to the related art shown in FIG. 2A and FIG. 2B, an outer periphery of a top land 115 positioned in the upper part of the piston 106 is structured so as to face an inner periphery of the cylinder liner 105. The outer periphery of the top land 115 and the inner periphery of the cylinder liner 105 are positioned in a region in which a flame does not propagate easily during combustion in the combustion chamber. Therefore, a deposit 121 is formed on the outer periphery of the top land 115. Further, a deposit 122 is formed on the inner periphery of the cylinder liner 105, which faces the outer periphery of the top land 115. The deposits are solid deposits generated due to imperfect combustion of fuel inside the combustion chamber.

However, out of the inner periphery of the cylinder liner 105, no deposit is basically formed on the inner periphery positioned lower than an upper surface of a top ring 118 when the piston 106 is at the top dead center. This is because, even though a deposit is adhered, the deposit is scraped off by the top ring 118 when the piston 106 slides. As shown in FIG. 2A, the position where the deposit 122 is formed is a position in the inner periphery of the cylinder liner 105, which faces the top land 115 when the piston 106 is at the top dead center.

The deposit 121 formed on the outer periphery of the top land 115 grows gradually to a radially outer side of the piston 106 as the internal combustion engine is operated. Similarly, the deposit 122 formed on the inner periphery of the cylinder liner 105 grows towards a radially inner side of the cylinder liner 105 as the internal combustion engine is operated. As growth of the deposits 121, 122 continues, the deposits 121, 122 come into contact with each other when the piston 106 is at the top dead center.

Next, movements of oil inside the cylinder 104 is explained. For the purpose of lubrication and so on between the sliding piston ring and the cylinder liner 105, oil is supplied into the cylinder 104 in which the piston 106 is arranged. In particular, oil adhered onto the outer periphery of the piston 106 moves upwardly along the outer periphery of the piston 106 due to reciprocating motions of the piston 106.

Specifically, oil 123a (in FIG. 2A and FIG. 2B) adhered onto the outer periphery of a second land 116 of the piston 106 moves upwardly along the outer periphery of the piston 106 due to inertia when the piston 106 descends. At that time, the top ring 118 moves inside a ring groove 114 so as to be in contact with an upper surface of the ring groove 114 as shown in FIG. 2B. Therefore, a gap is created between a lower surface of the ring groove 114 and a lower surface of the top ring 118. Oil 123b that has moved upwardly along the outer periphery of the second land 116 enters the ring groove 114 through the gap.

Thereafter, as the piston 106 ascends, the top ring 118 moves inside the ring groove 114 so as to be in contact with the lower surface of the ring groove 114 as shown in FIG. 2A. Thus, a gap is created between the upper surface of the ring groove 114 and an upper surface of the top ring 118. Oil accumulated inside the ring groove 114 moves upwardly through the gap onto the outer periphery of the top land 115. Oil 123c that has moved to the outer periphery of the top land 115 is adhered to the deposit 121 formed on the outer periphery of the top land 115.

Oil 124 adhered onto the inner periphery of the cylinder liner 105 is basically scraped off by the top ring 118 as the piston 106 descends. Therefore, an amount of oil that moves upwardly along the cylinder liner 105 is extremely small. Thus, the amount of oil 124 that moves upwardly along the cylinder liner 105 is negligible compared to an amount of oil 123 that moves upwardly along the outer periphery of the piston 106.

As stated above, the deposit 121 is formed on the outer periphery of the top land 115 of the piston 106. The deposit 122 is formed on the inner periphery of the cylinder liner 105. Then, as growth of the deposits 121, 122 continues, the deposit 121 and the deposit 122 come into contact with each other every time the piston 106 reaches the top dead center. As the deposits 121, 122 come into contact with each other as stated above, a part of oil adhered to the deposit 121 moves onto the deposit 122.

Thereafter, as the piston 106 descends, the deposit 122 formed on the inner periphery of the cylinder liner 105 is exposed to the combustion chamber as shown in FIG. 2B. At this time, although unlikely to be exposed to flame, the deposit 122 is exposed to high-temperature combustion gas. Therefore, oil 123d adhered to the deposit 122 is evaporated and disappears. Meanwhile, being exposed to high-temperature combustion gas, the deposit 122 itself is not burnt and remains as it is. This is considered to be because heat applied to the deposit 122 escapes to the cylinder liner 105 at relatively low temperature. Thus, the contact between the deposit 121 and the deposit 122 is still repeated every time the piston 106 slides, and disappearance of the oil 123 continues.

Even though the deposits 121, 122 are in contact with each other, a part of oil does not move and remains adhered to the deposit 121 formed on the outer periphery of the top land 115. The oil 123c remaining on the deposit 121 is rarely evaporated by high-temperature combustion gas in the combustion chamber when the piston 106 descends. This is considered to be because, even though combustion happens, temperature in a space between the outer periphery of the top land 115 and the inner periphery of the cylinder liner 105 does not become so high that the oil 123c would be evaporated. Since this space is narrow and surrounded by the piston 106 and the cylinder liner 105 at low temperature, it is considered unlikely that temperature becomes high. Further, since the outer periphery of the top land 115 of the descending piston 106 is unlikely to be exposed to high-temperature combustion gas, it is considered that the oil 123c is rarely evaporated. Therefore, oil 123d disappears solely on the deposit 122 formed on the inner periphery of the cylinder liner 105.

As stated above, the deposit 121 formed on the outer periphery of the top land 115 gradually grows to the radially outer side of the piston 106 as the internal combustion engine is operated. Then, growth of the deposit 121 continues up until the deposit 121 reaches the inner periphery of the cylinder liner 105. When the deposit 121 grows and reaches the inner periphery of the cylinder liner 105, the growth is hindered by the inner periphery of the cylinder liner 105. Therefore, the deposit 121 is no longer able to grow any further.

The deposit 122 formed on the inner periphery of the cylinder liner 105 also grows towards the radially inner side of the cylinder liner 105. The inventors found that, once reaching a certain height, the deposit 122 does not grow any further even though the deposit 122 does not reach the outer periphery of the top land of the piston 106. This is considered to be caused by the following mechanism.

The cylinder liner 105 is cooled by cooling water flowing in a water jacket (not shown). Therefore, at an initial stage of growth of the deposit 122, even though the deposit 122 is exposed to high-temperature combustion gas, temperature of the deposit 122 does not become so high that would cause self-disappearance of the deposit 122 because the deposit 122 is cooled by the cooling water through the cylinder liner 105. However, since the deposit 122 has low thermal conductivity, when the deposit 122 grows, a portion away from the cylinder liner 105 is not cooled by the cylinder liner 105 sufficiently. Thus, when the deposit 122 grows to a certain height or above, surface temperature of the deposit 122 becomes so high in a region at the certain height or above that causes self-disappearance of the deposit 122. As stated above, the deposit 122 formed to the certain height or above is exposed to high-temperature combustion gas inside the combustion chamber, and disappears by itself. As a result, it is considered that the deposit 122 formed on the cylinder liner 105 does not grow to the certain height or above.

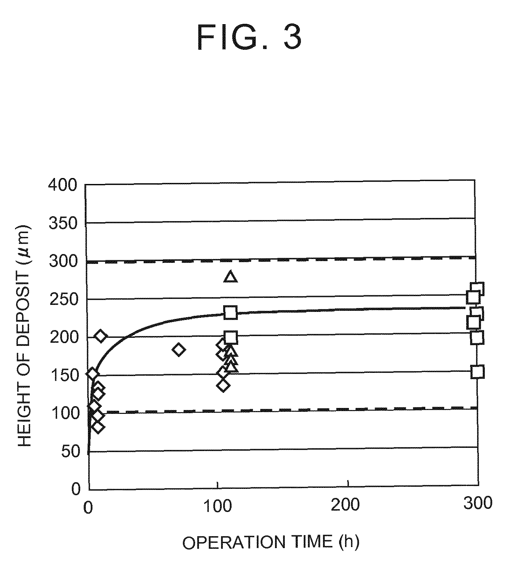

It was confirmed by the studies conducted by the inventors that, although slightly varied depending on conductions, the certain height of the deposit 122 was between 130 and 250 µm. This is explained by using FIG. 3.

FIG. 3 is view of a change of height of a deposit formed on an inner periphery of a cylinder liner with elapse of operation time. FIG. 3 shows results of plurality of tests conducted with each type of internal combustion engine. Different shapes of points in the drawing (triangle, quadrangle, and so on) mean types of internal combustion engines are different from each other. As seen in FIG. 3, in most cases, deposits formed on the inner peripheries of the cylinder liners grow rapidly to heights of about 100 µm to 200 µm in a short period of time after start of operation. Thereafter, after elapse of 100 hours of continuous operation, the deposits grow to heights of about 130 µm to 240 µm in most cases. However, there is no major changes thereafter, and the heights of the deposits are held at approximately 250 µm or lower in most of the internal combustion engines, and are also held at approximately 300 µm in almost all the internal combustion engines.

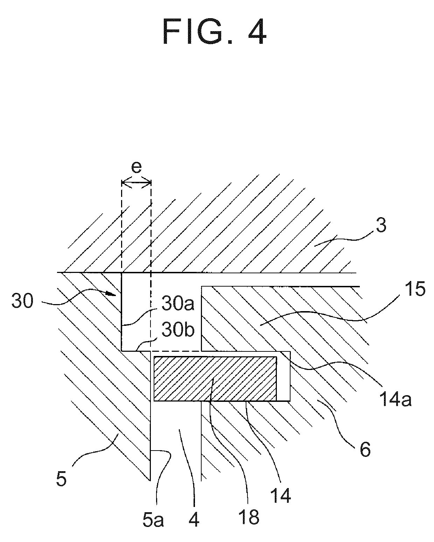

An internal combustion engine 1 according to a first embodiment is structured in consideration of the foregoing mechanism of the oil consumption and the growth mechanism of deposits. As shown in FIG. 4, the internal combustion engine 1 according to the first embodiment has an enlarged diameter part 30 in which a diameter of an inner periphery 5a of a cylinder liner 5 is enlarged. FIG. 4 is a sectional view of upper parts of a piston 6 and the cylinder liner 5 when the piston 6 is at a top dead center in the internal combustion engine 1 according to the first embodiment.

The enlarged diameter part 30 is defined by an inner periphery 30a and a bottom surface 30b. The diameter of the inner periphery 30a is enlarged with respect to the inner periphery 5a of the cylinder liner 5. The bottom surface 30b is a surface extending to a radially inner side of a cylinder 4 from a lower end of the inner periphery 30a. In this embodiment, the inner periphery 30a extends to an upper surface of the cylinder liner 5. A radius of the inner periphery 30a is larger than a radius of the inner periphery 5a by a radius enlargement dimension e. In this embodiment, the radius enlargement dimension e is 100 µm or larger but not exceeding 1000 µm. The radius enlargement dimension e is preferably 200 µm or larger, more preferably 250 µm or larger, and most preferably 300 µm or larger. In addition, the radius enlargement dimension e is preferably 800 µm or smaller, more preferably 600 µm or smaller, and most preferably 500 µm or smaller.

In this embodiment, the bottom surface 30b is structured to be at a position equal to a position of an upper surface 14a of a ring groove 14 in an axial direction of the cylinder 4 when the piston 6 is at the top dead center.

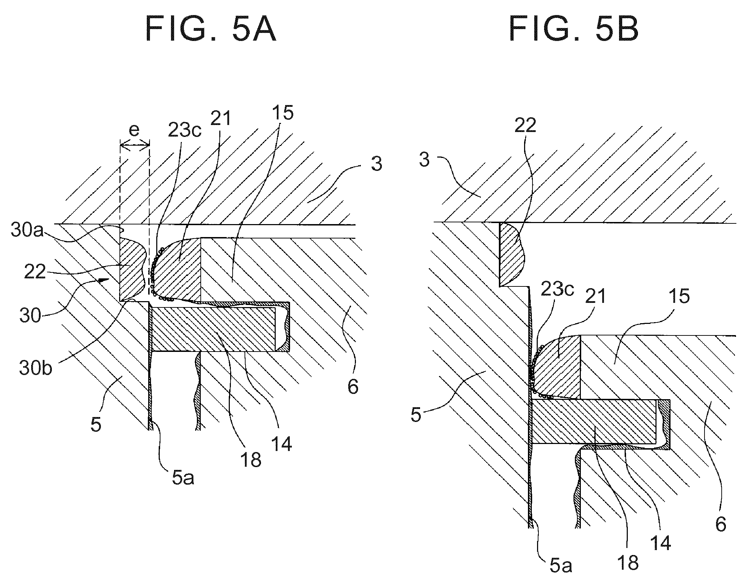

FIG. 5A and FIG. 5B are views of a state where deposits 21, 22 are formed on the piston 6 and the cylinder liner 5 shown in FIG. 4. FIG. 5A is a sectional view when the piston 6 is at the top dead center. FIG. 5B is a sectional view when the piston 6 is positioned below the top dead center. As shown in FIG. 5A, the deposit 22 on the cylinder liner 5 is formed on the inner periphery 30a of the enlarged diameter part 30. As stated earlier, once the deposit 22 grows to a certain height, the deposit 22 does not grow any further. Therefore, for example, in a case of an internal combustion engine in which the deposit 22 grows up to 280 µm, the radius enlargement dimension e is set to 300 µm. Then, the deposit 22 formed on the inner periphery 30a does not grow to a radially inner side up to the same plane as the inner periphery 5a.

As stated earlier, the deposit 21 on the outer periphery of the top land 15 does not grow to the radially outer side of the inner periphery 5a of the cylinder liner 5. Therefore, as shown in FIG. 5A, even when the piston 6 is at the top dead center, the deposit 21 does not come into contact with the deposit 22. Oil 23c adhered to the deposit 21 does not move to the deposit 22, which results in a reduction of disappearance of oil.

As stated above, unless the deposit 21 on the piston 6 side and the deposit 22 on the cylinder liner 5 side are in contact with each other, it is possible to reduce disappearance of oil. Therefore, in this embodiment, even though the deposit 22 is adhered to the inner periphery 30a, the inner periphery 30a of the enlarged diameter part 30 is provided so that the deposit 22 does not grow on the radially inner side of the inner periphery 5a. This means that the radius enlargement dimension e is set to a value larger than a maximum growing height of the deposit 22, namely a value within the numerical value range stated earlier. Hence, for example, in a case where the maximum height of the deposit 22 formed on the inner periphery of the cylinder liner 5 is 150 µm, the radius enlargement dimension e is a value larger than 150 µm.

In a case of a gasoline engine, it is unlikely that air-fuel mixture that has entered the enlarged diameter part 30 contributes to initial combustion. Therefore, as the enlarged diameter part 30 is increased, deterioration of combustion of the air-fuel mixture inside the combustion chamber 7 is caused. Therefore, the radius enlargement dimension e of the enlarged diameter part 30 should not be increased more than necessary. In a case of a diesel engine, since the enlarged diameter part 30 becomes an unnecessary volume in which air enters, the radius enlargement dimension e should not be increased more than necessary. Because of these reasons, in this embodiment, it is preferred that the radius enlargement dimension e is 1000 µm or smaller, preferably 800 µm or smaller, more preferably 600 µm or smaller, most preferably 500 µm or smaller. Thus, it is possible to minimize deterioration of combustion of air-fuel mixture caused by provision of the enlarged diameter part 30.

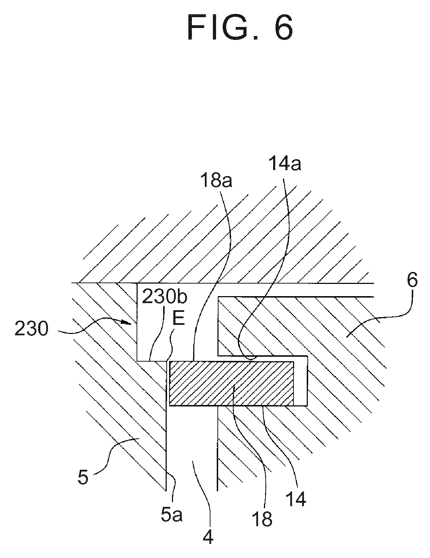

FIG. 6 is a sectional view of an internal combustion engine according to the first modified example of the first embodiment shown in FIG. 4. Structures of a piston 6 and a cylinder liner 5 according to this modified example are basically similar to the structures of the piston 6 and the cylinder liner 5 according to the embodiment explained in FIG. 4 except the parts explained below.

In this modified example, a bottom surface 230b of an enlarged diameter part 230 is structured so as to be at a position equal to an upper surface 18a of a top ring 18 in an axial direction of a cylinder 4 when the piston 6 is at a top dead center. With such a structure, the top ring 18 is able to slide to an uppermost end of an inner periphery 5a of the cylinder liner 5 as shown in FIG. 6. Even if a deposit is formed in the vicinity of the uppermost end of the non-enlarged inner periphery 5a of the cylinder liner 5, it is possible to remove the deposit completely by the top ring 18.

In the first embodiment described by using FIG. 4, the position of the bottom surface 30b is equal to the position of the upper surface 14a of the ring groove 14 in the axial direction of the cylinder 4 when the piston 6 is at the top dead center. Further, in the first modified example described by using FIG. 6, the position of the bottom surface 230b is equal to the position of the upper surface 18a of the top ring 18 in the axial direction of the cylinder 4 when the piston 6 is at the top dead center. However, the position of the bottom surface 230b is not limited to both of the positions. For example, the position of the bottom surface 230b may be set to an arbitrary position between the position of the bottom surface 30b in the axial direction of the cylinder 4 shown in FIG. 4, and the position of the bottom surface 230b in the axial direction of the cylinder 4 shown in FIG. 6. This means that the position of the bottom surface 230b of the enlarged diameter part 230 is an arbitrary position in the axial direction in the cylinder 4 between the position of the upper surface 14a of the ring groove 14, and the position of the upper surface 18a of the top ring 18 when the piston 6 is at the top dead center. Further, the position of the bottom surface 230b may be set slightly below the position of the upper surface 18a of the top ring 18. Therefore, the position of the bottom surface 230b of the enlarged diameter part 230 may be a position slightly lower than the position of the upper surface 14a of the ring groove 14 in the axial direction of the cylinder 4 when the piston 6 is at the top dead center.

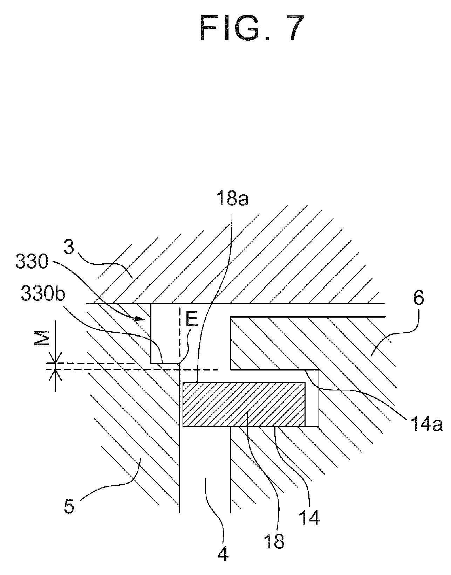

FIG. 7 is a sectional view of an internal combustion engine according to the second modified example of the first embodiment shown in FIG. 4. Structures of a piston 6 and a cylinder liner 5 according to the second modified example are basically similar to the structures of the piston 6 and the cylinder liner 5 shown in FIG. 4 except for the parts explained below.

When a top ring 18 moves above a bottom surface 330b of an enlarged diameter part 330, the top ring 18 is caught on the enlarged diameter part 330 due to a corner part E, and the top ring 18 could be damaged. Therefore, in the second modified example shown in FIG. 7, the bottom surface 330b is structured so as to be positioned above a position of an upper surface 14a of a ring groove 14 in an axial direction of a cylinder 4 when the piston 6 is at a top dead center. Specifically, the bottom surface 330b is structured so as to be positioned above the upper surface 14a of the ring groove 14 in the axial direction of the cylinder 4 by a margin M when the piston 6 is at the top dead center. The margin M is, for example, a value of 0 to 1000 µm, and preferably 0 to 500 µm.

According to the second modified example, it is possible to restrain the top ring 18 from entering and damaging the enlarged diameter part 330.

Summarizing the first embodiment, the first modified example, and the second modified example, the bottom surface of the enlarged diameter part is structured so as to be at an arbitrary position between the position of the upper surface of the top ring 18 and the position higher than the upper surface 14a of the ring groove 14 by the margin M in the axial direction of the cylinder 4 when the piston 6 is at the top dead center. However, it is only necessary that the enlarged diameter part is provided at least in a part of the inner periphery of the cylinder liner, which faces the top land 15, when the piston 6 is at the top dead center. By providing the enlarged diameter part in this way, it is possible to reduce a contact area between a deposit formed the top land 15 and a deposit formed on the cylinder liner 5.

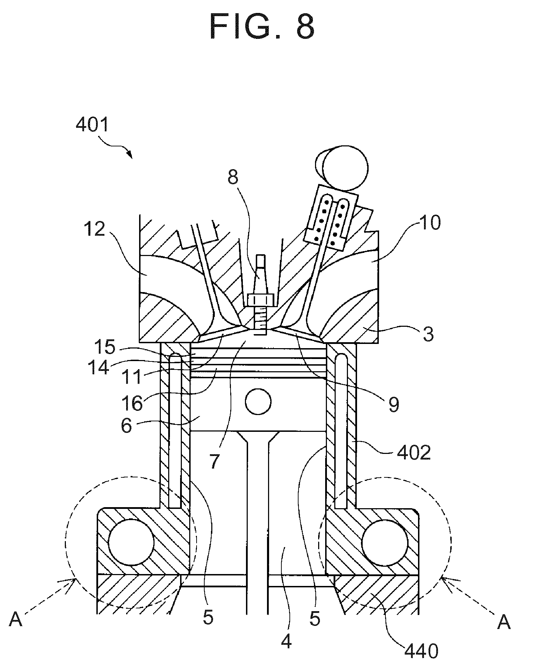

Next, with reference to FIG. 8, an internal combustion engine according to the second embodiment is explained. A structure of an internal combustion engine 401 according to the second embodiment is basically similar to the structure of the internal combustion engine 1 according to the first embodiment explained in FIG. 4 except for the parts explained below.

FIG. 8 is a sectional view of the internal combustion engine 401 having a variable compression ratio mechanism A. Referring to FIG. 8, reference numeral 440 denotes a crankcase, and reference numeral 402 denotes a cylinder block. As seen in FIG. 8, the internal combustion engine 401 according to the second embodiment has the variable compression ratio mechanism A that is able to change a mechanical compression ratio by changing a relative distance between the crankcase 440 and the cylinder block 402.

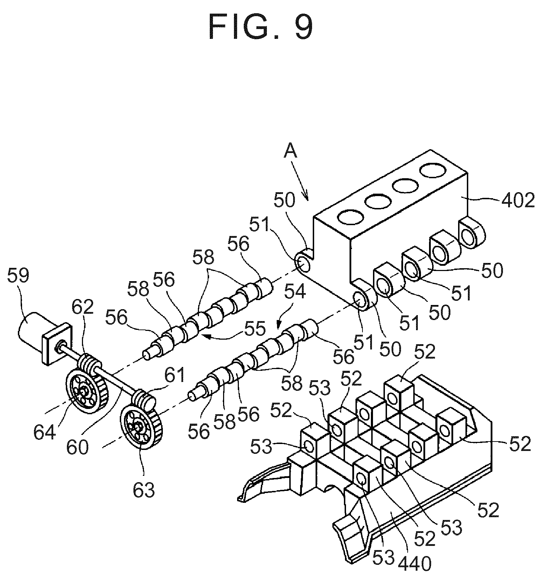

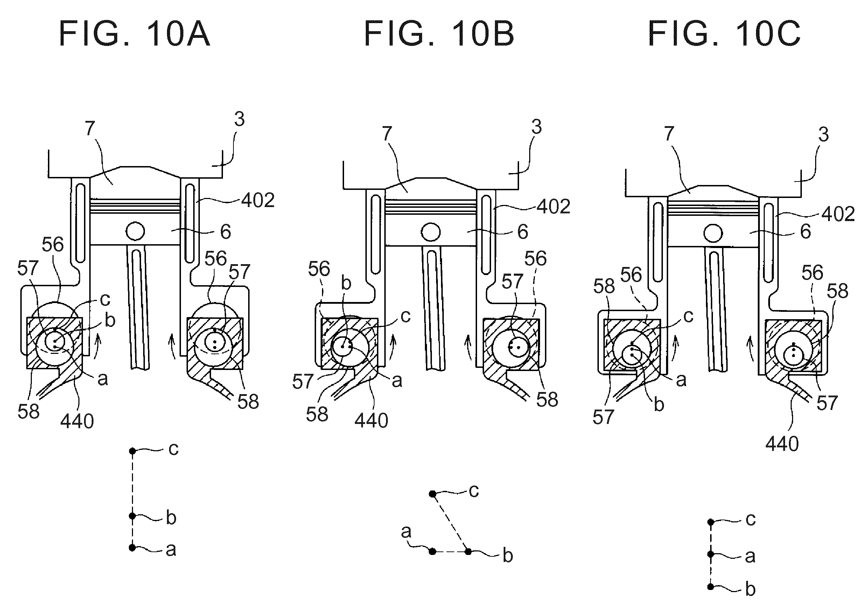

FIG. 9 is an exploded perspective view of the variable compression ratio mechanism A shown in FIG. 8, and FIG. 10A to FIG. 10C illustrate side sectional views of the internal combustion engine 401 shown in FIG. 8. The variable compression ratio mechanism A is a mechanism for changing a volume of a combustion chamber 7 depending on a load of the internal combustion engine 401, thereby adjusting a mechanical compression ratio. With reference to FIG. 9, a plurality of projecting parts 50 are formed so as to be separated from each other at intervals in lower parts of both side walls of the cylinder block 402 in a transverse direction. In each of the projecting parts 50, a circular cam insertion hole 51 is formed. Meanwhile, a plurality of projecting parts 52 are formed on an upper surface of the crankcase 440. The plurality of projecting parts 52 are arranged so as to be separated from each other at intervals. The plurality of projecting parts 52 are fitted between the corresponding projecting parts 50. In each of the plurality of projecting parts 52, a circular cam insertion hole 53 is provided.

As shown in FIG. 9, the variable compression ratio mechanism A is provided with a pair of camshafts 54, 55. Circular cams 58 are fixed onto each of the camshafts 54, 55. The circular cams 58 are inserted into the cam insertion holes 53, respectively, so as to be able to rotate. The circular cams 58 are coaxial with a rotation axis of each of the camshafts 54, 55. Meanwhile, as shown in FIG. 10A to FIG. 10C, in each of the circular cams 58, an eccentric shaft 57 extends, which is eccentrically arranged with respect to the rotation axis of each of the camshafts 54, 55. Another circular cams 56 are eccentrically mounted on the eccentric shafts 57 so as to be able to rotate. As shown in FIG. 9, these circular cams 56 are arranged alternately with the circular cams 58 in a camshaft longitudinal direction. The circular cams 56 are inserted into the corresponding cam insertion holes 51, respectively, so as to be able to rotate.

As the circular cams 58 fixed onto the camshafts 54, 55 are rotated in opposite directions to each other as shown by arrows in FIG. 10A, the eccentric shafts 57 move in a direction separating from each other. Thus, the circular cams 56 rotate inside the cam insertion holes 51 in directions opposite to the circular cams 58. Then, as shown in FIG. 10B, the position of the eccentric shaft 57 changes from a high position to an intermediate height position. Next, as the circular cams 58 are further rotated in the directions shown by the arrows, the eccentric shafts 57 move to the lowest positions as shown in FIG. 10C.

FIG. 10A to FIG. 10C show a positional relationship among a center a of the circular cam 58, a center b of the eccentric shaft 57, and a center c of the circular cam 56 in the respective states.

As understood from comparison among FIG. 10A to FIG. 10C, relative positions of the crankcase 440 and the cylinder block 402 are determined by a distance between the center a of the circular cams 58 and the center c of the circular cams 56. As the distance between the center a of the circular cams 58 and the center c of the circular cams 56 increases, the cylinder block 402 is separated more from the crankcase 440. This means that the variable compression ratio mechanism A changes relative positions of the crankcase 440 and the cylinder block 402 by a crank mechanism in which rotating cams are used. As the cylinder block 402 is separated from the crankcase 440, the volume of the combustion chamber 7 when the piston 6 is at the compression top dead center is increased. Therefore, by rotating each of the camshafts 54, 55, it is possible to change the volume of the combustion chamber 7 when the piston 6 is at the compression top dead center. As a result, according to the variable compression ratio mechanism A, it is possible to change the relative positions of the piston 6 and the cylinder block 402 in the axial direction of the cylinder 4. The variable compression ratio mechanism A is also able to change a compression ratio of the internal combustion engine 401.

In particular, in the state shown in FIG. 10A, when the piston 6 at the top dead center, the piston 6 is at the lowermost position relative to the cylinder block 402. Therefore, in this state, the compression ratio becomes the smallest. Meanwhile, in the state shown in FIG. 10C, when the piston 6 is at the top dead center, the piston 6 is at the uppermost position relative to the cylinder block 402. Therefore, in this state, the compression ratio becomes the largest.

As shown in FIG. 9, in order to rotate the camshafts 54, 55 in opposite directions to each other, a pair of worms 61, 62 having opposite helix directions are mounted on a rotating shaft of a drive motor 59. Worm wheels 63, 64, which are engaged with the worms 61, 62, are fixed to end parts of the camshafts 54, 55, respectively. In this embodiment, the volume of the combustion chamber 7 when the piston 6 is positioned at the compression top dead center is changed in a wide range by driving the drive motor 59. The variable compression ratio mechanism A shown in FIG. 9, and FIG. 10A to FIG. 10C is just an example, any form of variable compression ratio mechanism may be used.

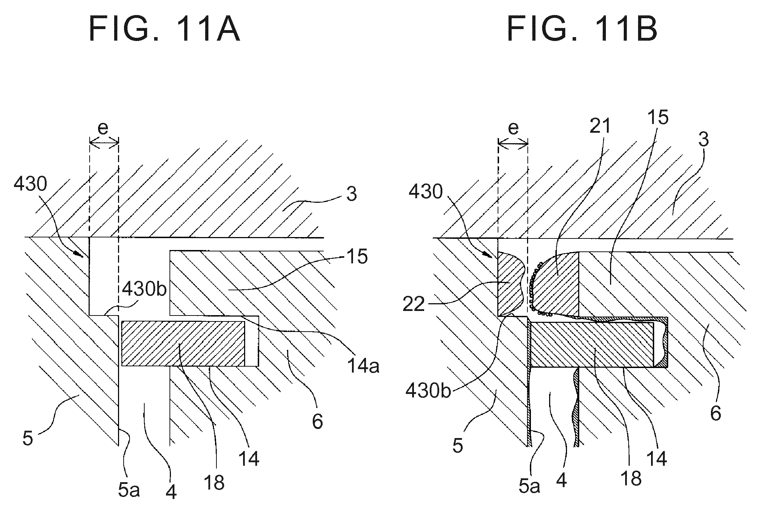

FIG. 11A is a sectional view when the piston 6 is at the top dead center in the state shown in FIG. 10C, namely, in a state in which a compression ratio set by the variable compression ratio mechanism A becomes the largest. Further, FIG. 11B is a sectional view showing a state where deposits are formed on the piston 6 and a cylinder liner 5 of the internal combustion engine shown in FIG. 11A.

As shown in FIG. 11A, when the piston 6 is at the top dead center in the state shown in FIG. 10C, a bottom surface 430b is structured so as to be at a position equal to a position of an upper surface 14a of a ring groove 14 in an axial direction of a cylinder 4. Therefore, in the state where the compression ratio set by the variable compression ratio mechanism A is the lowest, the position of the bottom surface 430b becomes equal to the position of the upper surface 14a of the ring groove 14 in the axial direction of the cylinder 4 when the piston 6 is at the top dead center.

As an enlarged diameter part 430 is structured as above, the compression ratio set by the variable compression ratio mechanism A becomes the largest. As long as the compression ratio set by the variable compression ratio mechanism A is the largest, a deposit 21 on the piston 6 side and a deposit 22 on the cylinder liner 5 side do not come into contact with each other, like the foregoing first embodiment explained by using FIG. 5A. Therefore, oil does not move between the deposits 21, 22, thereby restraining disappearance of oil.

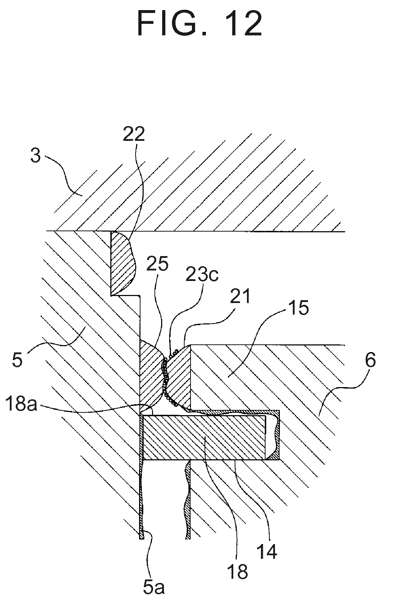

Meanwhile, for example, FIG. 12 shows a case where a compression ratio set by the variable compression ratio mechanism A continues to be the smallest. FIG. 12 is a sectional view when the piston 6 is at the top dead center in the state shown in FIG. 10A, namely, a state in which the compression ratio set by the variable compression ratio mechanism A is the smallest. As shown in FIG. 12, in the case where the compression ratio set by the variable compression ratio mechanism A continues to be the smallest, a deposit 25 could be formed on an inner periphery 5a of the cylinder liner 5, the diameter of which is not enlarged. However, even if the deposit 25 is formed on the inner periphery 5a of the cylinder liner 5 as shown in FIG. 12, once the compression ratio is increased by the variable compression ratio mechanism A, the position of the piston 6 at the top dead center moves upwardly relative to the cylinder liner 5. As a result, the deposit 25 formed on the inner periphery 5a of the cylinder liner 5 is scraped by the piston 6 when the piston 6 ascends. Therefore, a deposit 21 on an outer periphery of a top land 15 of the piston 6 does not come into contact with the deposit 25 on the inner periphery 5a of the cylinder liner 5 continuously, thereby restraining disappearance of oil.

As shown in FIG. 11A, the position of the bottom surface 430b of the enlarged diameter part is equal to the position of the upper surface 14a of the ring groove 14 in the axial direction of the cylinder 4 in the state where the compression ratio set by the variable compression ratio mechanism A is the largest, and when the piston 6 is at the top dead center (also referred to as "predetermined top dead center"). However, the position of the bottom surface 430b is not limited to this. Like examples shown in FIG. 6 and FIG. 7, the bottom surface 430b may be at an arbitrary position between a position of an upper surface 18a of a top ring 18 and a position higher than the upper surface 14a of the ring groove 14 by a margin M in the state where the compression ratio set by the variable compression ratio mechanism A is the largest and when the piston 6 is at the top dead center. Alternatively, the enlarged diameter part 430 only needs to be provided at least in a part of the inner periphery of the cylinder liner 5, which faces the top land 15 of the piston 6, in the state where the compression ratio set by the variable compression ratio mechanism A is the largest and when the piston 6 is at the top dead center.

In the foregoing embodiment, the above-mentioned variable compression ratio mechanism A is used as a device that changes relative positions of the piston 6 and the cylinder block 2 when the piston 6 is at the top dead center. However, such a device is not limited to this, and any device may be used as long as the device is able to change relative positions of the piston 6 and the cylinder block 2 when the piston 6 is at the top dead center.

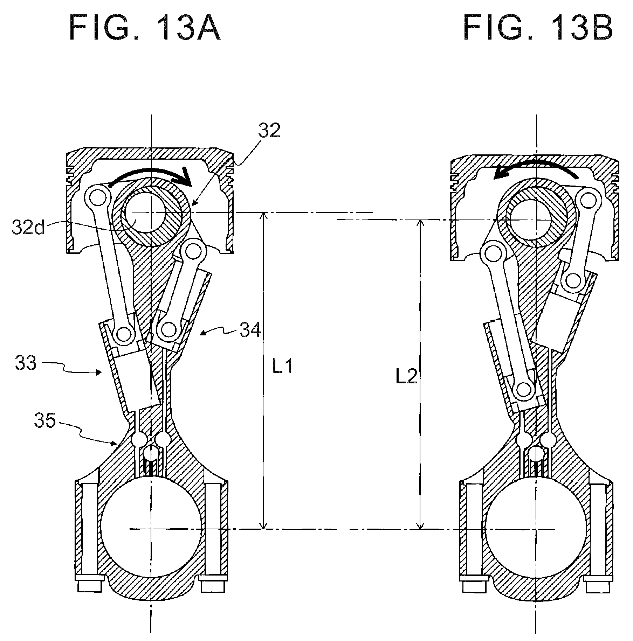

As an example of such a device, there is a mechanism for changing an effective length of a connecting rod of a piston 6 as shown in FIG. 13A and FIG. 13B. Here, the effective length of the connecting rod means a distance between a center of a crank-receiving opening that receives a crank pin, and a center of a piston pin-receiving opening that receives the piston.

As shown in FIG. 13A and FIG. 13B, the variable length connecting rod includes an eccentric member 32, a first piston mechanism 33, a second piston mechanism 34, and a flow direction changing mechanism 35. The eccentric member 32 is provided in a small-diameter end part of the body of the connecting rod so as to be able to pivot. The first piston mechanism 33 and the second piston mechanism 34 are provided in the body of the connecting rod. The flow direction changing mechanism 35 switches a flow of hydraulic oil towards the first piston mechanism 33 and the second piston mechanism 34. In the eccentric member 32, a receiving opening 32d for receiving a piston pin is provided. The receiving opening 32d is eccentric to a rotation axis of the eccentric member 32.

In the variable length connecting rod structured as above, a flow of hydraulic oil is switched by the flow direction changing mechanism 35 so that the hydraulic oil flows from the second piston mechanism 34 to the first piston mechanism 33. When the flow is switched so that the hydraulic oil flows from the second piston mechanism 34 to the first piston mechanism 33, the eccentric member 32 turns in the direction shown by the arrow in FIG. 13A. As a result, the effective length of the connecting rod is increased (L1 in the drawing), and a compression ratio is increased. Meanwhile, when the flow direction changing mechanism 35 switches the flow of hydraulic oil so that the hydraulic oil flows from the first piston mechanism 33 to the second piston mechanism 34, the eccentric member 32 turns in the direction shown by the arrow in FIG. 13B. As a result, the effective length of the connecting rod becomes small (L2 in the drawing), and the compression ratio is reduced.

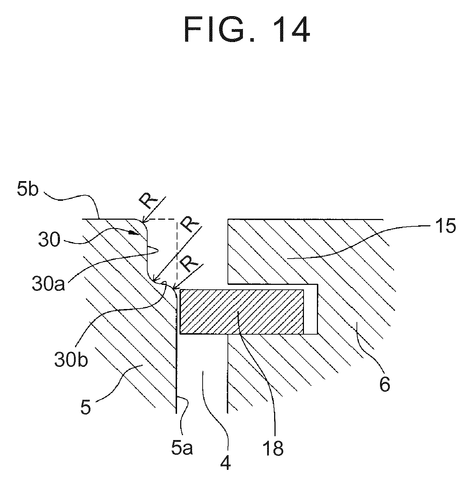

FIG. 14 is a sectional view similar to FIG. 4, showing an internal combustion engine according to a third embodiment. Structures of a piston 6 and a cylinder liner 5 according to this embodiment are basically similar to the structures of the piston 6 and the cylinder liner 5 according to the embodiment explained in FIG. 4, except the parts explained below.

In this embodiment, a connecting part between an upper surface 5b and an inner periphery 30a with an enlarged diameter in a cylinder liner 5, a connecting part between the inner periphery 30a with the enlarged diameter and a bottom surface 30b, and a connecting part between the bottom surface 30b and an inner periphery 5a without an enlarged diameter, have round shapes. However, in a case where the inner periphery 5a without an enlarged diameter is located above the inner periphery 30a with the enlarged diameter, a connecting part between the upper surface 5b of the cylinder liner 5 and the inner periphery 5a without the enlarged diameter, not between the upper surface 5b of the cylinder liner 5 and the inner periphery 30a with the enlarged diameter, has a round shape. Thus, in a manufacturing process for inserting the piston 6 into the cylinder 4 towards the bottom of the cylinder 4 in the axial direction of the cylinder 4, the piston 6 and the top ring 18 are prevented from being damaged by edges inside the cylinder liner 5, thereby making assembly easy. In FIG. 14, an upper edge part of the inner periphery 30a made by enlarging the diameter of the cylinder liner 5, the connecting part between the inner periphery 30a with the enlarged diameter and the bottom surface 30b, and the connecting part between the bottom surface 30b and the inner periphery 5a without the enlarged diameter, are all formed into round shapes. However, not all of them need to have round shapes, and the above-mentioned effects are obtained when at least one of them has a round shape.

The cylinder liner 5 in this specification is a surface that defines the cylinder 4, and represents a part that has a surface on which the top ring 18 arranged in the piston 6 slides. Therefore, the cylinder liner 5 in this specification may be a cylinder body which is a separate body cast in a cylinder block 2, or may be an integral part of the cylinder block 2, which has an inner surface of a cylinder bore on which a sprayed film is formed.

In this specification, the height of the deposit 22 means a dimension of the deposit 22 in the direction perpendicular to the outer periphery of the piston 6 or the inner periphery 5a of the cylinder liner 5. Therefore, the height of the deposit 21 adhered onto the outer periphery of the piston 6 means a dimension from the outer periphery of the piston 6 to the outermost position of the deposit 21 in the radial direction of the cylinder 4. Similarly, the height of the deposit 22 adhered to the inner periphery 5a of the cylinder liner 5 means a dimension from the inner periphery 5a of the cylinder liner 5 to the innermost position of the deposit 22 in the radial direction of the cylinder 4.

## Claims

1. An internal combustion engine (1) comprising:
a cylinder block (2);
a cylinder liner (5) having a cylindrical shape and being provided inside the cylinder block (2);
a piston (6) being positioned inside the cylinder liner (5) and including a ring groove (14) and a top land (15), the ring groove (14) being positioned on an outer periphery of the piston (6) in a vicinity of the top land (15); and
a piston ring (18) being arranged inside the ring groove (14),
**characterized in that**
the cylinder liner (5) includes a first portion (30) and a second portion,
the first portion (30) is positioned at least in a part of an inner periphery (5a) of the cylinder liner (5), which faces the top land (16) of the piston (6) when the piston (6) is at a predetermined top dead center,
the first portion (30) includes a first inner periphery (30a) having a first radius,
the second portion includes a second inner periphery (5a) having a second radius, and
the first radius is larger than the second radius by 100 µm to 1000 µm.

2. The internal combustion engine according to claim 1, **characterized in that**
the first portion (30) includes a bottom surface (30b) extending from a lower end of the first inner periphery (30a) to a radially inner side of the cylinder liner (5),
the first portion (30) is defined by the bottom surface (30b) and the first inner periphery (30a), and
the bottom surface (30b) is at a position equal to or above an upper surface (18a) of the piston ring (18) in an axial direction of the cylinder liner (5) when the piston (6) is at the predetermined top dead center.

3. The internal combustion engine according to claim 2, **characterized in that**
the bottom surface (30b) is at a position equal to an upper surface of the ring groove (14) in the axial direction of the cylinder liner (5) when the piston (6) is at the predetermined top dead center.

4. The internal combustion engine according to claim 2, **characterized in that** the bottom surface (30b) of the first portion (30) is positioned above an upper surface of the ring groove (14) in the axial direction of the cylinder liner (5) by a predetermined margin (M) when the piston (6) is at the predetermined top dead center.

5. The internal combustion engine according to claim 4, **characterized in that** the predetermined margin (M) is less than 1000 µm, preferably less than 500 µm.

6. The internal combustion engine according to any one of claims1 to 5, further comprising a variable compression ratio mechanism (A) configured to change a mechanical compression ratio by changing relative positions of the piston (6) and the cylinder block (2) in the axial direction of the cylinder liner (5) when the piston (6) is at a top dead center, wherein the piston (6) is at the predetermined top dead center in a state where the mechanical compression ratio set by the variable compression ratio mechanism (A) is the largest.

7. The internal combustion engine according to any one of claims 1 to 6, **characterized in that**
the first portion (30) extends to an upper surface (5b) of the cylinder liner (5),
the upper surface (5b) and the first inner periphery (30a) are connected at a first connecting portion,
the first inner periphery (30a) and the bottom surface (30b) are connected at a second connecting portion,
the bottom surface (30b) and the second inner periphery (5a) are connected at a third connecting portion,
at least one of the first connecting portion, the second connecting portion, and the third connecting portion is rounded.

8. A manufacturing method of an internal combustion engine, the internal combustion engine comprising:
a cylinder block (2);
a cylinder liner (5) having a cylindrical shape and being positioned inside the cylinder block (2);
a piston (6) being positioned inside the cylinder liner (5) and including a ring groove (14) and a top land (15), the ring groove (14) being positioned on an outer periphery (of the piston (6) in a vicinity of the top land (15); and
a piston ring (18) being arranged inside the ring groove (14), wherein
the cylinder liner (5) includes a first portion (30) and a second portion,
the first portion (30) is positioned at least in a part of an inner periphery (5a) of the cylinder liner (5), which faces the top land (15) of the piston (6) when the piston (6) is at a predetermined top dead center,
the first portion (30) includes a first inner periphery (30a) having a first radius, and
the second portion includes a second inner periphery (5a) having a second radius,
**characterized by** comprising:
setting a difference between the first radius and the second radius such that the difference is larger than a maximum accumulated height of a deposit (22) that is expected to be accumulated on the first inner periphery (30a) during operation of the internal combustion engine (1) over at least 100 hours, preferably setting the difference to a value from 100 µm to 1000 µm.
